(19) Europäisches Patentamt
European Patent Office
Office européen des brevets

(11) Numéro de publication: **0 250 779**
**A1**

(12) # DEMANDE DE BREVET EUROPEEN

(21) Numéro de dépôt: **87106536.3**

(22) Date de dépôt: **06.05.87**

(51) Int. Cl.³: **C 03 C 17/32**

(30) Priorité: **07.05.86 FR 8606661**

(43) Date de publication de la demande:
**07.01.88 Bulletin 88/1**

(84) Etats contractants désignés:
**AT BE CH DE ES FR GB IT LI NL SE**

(71) Demandeur: **SOCIETE DES VERNIS BOUVET**
**B.P. 51 Rue Chanay 14**
**I-71700 Tournus(FR)**

(72) Inventeur: **Dubois, Jean**
**"En Bagatelle"**
**F-71700 Tournus(FR)**

(72) Inventeur: **Duchassin, Monique**
**Le Bouchet**
**F-71260 Lugny(FR)**

(72) Inventeur: **Didierjean, Sylvie**
**233 la Croix Machou**
**F-71700 Tournus(FR)**

(72) Inventeur: **Hibon, Stéphane**
**Venères Boyer**
**F-71700 Tournus(FR)**

(72) Inventeur: **Surin, Françoise**
**Dulphey mancey**
**F-71700 Tournus(FR)**

(72) Inventeur: **Tillet, Georges**
**Chemin des Loups**
**F-71700 Tournus(FR)**

(74) Mandataire: **Casalonga, Axel**
**BUREAU D.A. CASALONGA - JOSSE Morassistrasse 8**
**D-8000 Munich 5(DE)**

(54) **Procédé de réparation de bouteilles.**

(57) L'invention est relative à un procédé de réparation de récipients en verre consistant à appliquer sur ces récipients une composition comprenant une résine acrylique, acrylique époxylée, polyester acrylique ou uréthane acrylique réticulable par rayonnement UV ou laser en solution dans au moins un monomère acrylique ou méthacrylique mono-, di-, ou trifonctionnel.

EP 0 250 779 A1

Croydon Printing Company Ltd.

"Procédé de réparation de bouteilles"

L'invention a pour objet un procédé de réparation de récipients tels que des bouteilles en verre par le dépôt d'un revêtement polymérisable au rayonnement UV ou au laser.

On souhaite pouvoir réutiliser plusieurs fois les récipients en verre plus particulièrement les bouteilles destinées à contenir des boissons, telles que par exemple de la bière. On appelle également ce genre de récipients, "récipients consignés".

Une telle réutilisation présente des avantages non négligeables au niveau des coûts et elle permet de résoudre les problèmes de pollution mais elle n'est pas sans présenter des problèmes. En effet, les bouteilles, notamment en verre, généralement consignées présentent l'inconvénient de se rayer ou de se fracturer au cours des utilisations successives et en conséquence présentent après plusieurs utilisations un aspect peu esthétique et sont parfois fragilisées du fait de certains éclats. En conséquence, les fabricants de boisson, tels que les brasseries, sont tenus de renouveler leur stock de bouteilles consignables au bout d'un certain nombre d'utilisation, ce qui constitue des dépenses considérables.

La demanderesse a donc pensé à revêtir ces bouteilles d'un revêtement qui pourrait remédier à ces défauts de surface et autoriser une utilisation plus longue des bouteilles consignées.

L'application d'un revêtement présente cependant également un certain nombre de problèmes dans la mesure où le coût de l'application ne doit pas devenir prohibitif par rapport au coût du remplacement au bout d'un certain nombre d'utilisations. Par ailleurs, l'application du revêtement ne doit pas non plus ralentir de façon substantielle la chaîne d'embouteillage. Enfin, le revêtement lui-même doit pouvoir être compatible avec les procédés usuels de lavage utilisés avant la réutilisation de ces bouteilles.

La demanderesse a découvert, ce qui fait l'objet de l'invention, un nouveau procédé de revêtement de tels récipients, ce procédé permettant de rénover les bouteilles de façon très rapide, au cours de la phase d'embouteillage du contenu de ces récipients sans nuire de trop aux cadences de la chaîne. Ce procédé permet également d'obtenir un revêtement qui peut s'éliminer très facilement au lavage dans des conditions courantes du lavage utilisé en brasserie.

Par ailleurs, les bouteilles ainsi revêtues ont un aspect esthétique, une résistance à la casse et une glisse améliorés par rapport aux bouteilles consignées, réutilisées plusieurs fois.

L'invention a donc pour objet un nouveau procédé de revêtement de récipients en verre permettant leur réutilisation à base d'une matière polymérisable au rayonnement UV ou laser.

D'autres objets de l'invention apparaîtront à la lecture de la description et des exemples qui suivent.

Le procédé de l'invention consiste essentiellement à appliquer sur lesdits récipients en verre une composition comprenant au moins une résine de type acrylique, acrylique époxylé, polyester ou uréthane acrylique réticulable par rayonnement, en solution dans au moins un monomère acrylique ou méthacrylique, mono-, di- ou tri- fonctionnel.

Ces résine répondent notamment à la formule

$$CH_2 = CH - \underset{\underset{O}{\|}}{C} - O \;[\, A \,]\; O - \underset{\underset{O}{\|}}{C} - CH = CH_2$$

ou A peut désigner par exemple

$$-(CH_2)_6 \,[\, O - \underset{\underset{O}{\|}}{C} -(CH_2)_4 - \underset{\underset{O}{\|}}{C} - O -(CH_2)_6 \,]_n$$

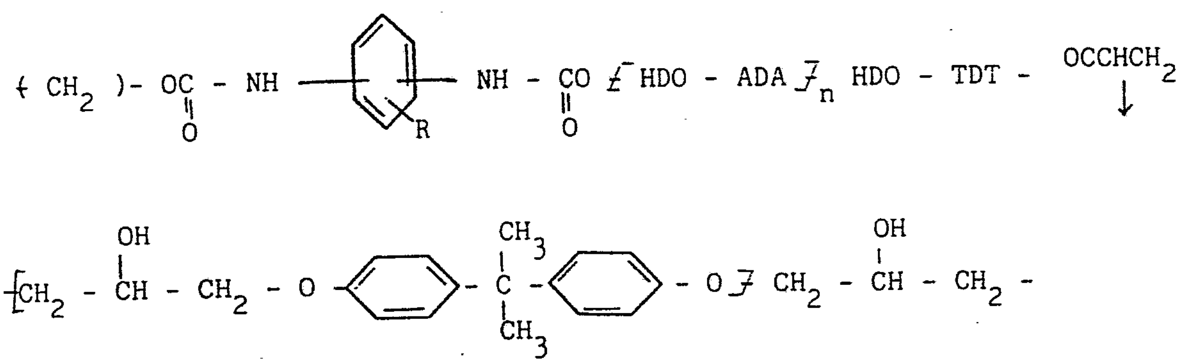

HDO 1,6 hexane diol

ADA Acide adipique

TDI diisocyanate de toluene

R designe un groupement alkyle tel que méthyle.

Les résines acryliques mentionnées ci-dessus, réticulables par rayonnement sont connues en elles-mêmes et on peut citer à cet effet, les produits commercialisés sous les dénominations EBECRYL par la société UCB pour des acrylates polyester ou des acrylates uréthane ou bien des produits vendus sous la dénomination NORSOLYDE par la société CDF Chimie, ou encore les produits commercialisés sous la dénomination ACTYLANE par la société SNPE, les produits commercialisés sous le nom de LAROMER par la société .

Les résines polymérisables par rayonnement tels que UV ou laser, ont un indice d'acide élevé, de préférence égal ou supérieur à 100 et sont utilisés de préférence dans les proportions de 25% à 80% en poids par rapport au poids total de la composition.

Les monomères acryliques ou méthacryliques mono, di ou tri fonctionnel utilisables conformément à l'invention sont choisis plus particulièrement parmi l'acide acrylique ou méthacrylique et les esters de ces acides tels que plus particulièrement le diacrylate de butanediol, le diacrylate d'hexanediol, le diacrylate de triéthylènediol, le diacrylate de diéthylèneglycol, le diacrylate de triéthylèneglycol, le diacrylate de tétraéthylèneglycol, le diacrylate de dipropylèneglycol, le diacrylate de tripropylèneglycol, le diacrylate de triméthylol propane, le diacrylate de pentaérythritol, l'hydroxyméthyl acrylate, l'éthyldiglycol acrylate.

Selon une forme de réalisation de l'invention, la composition contient également un solvant organique tel qu'un solvant aromatique, cétonique, un ester ou un alcool. Parmi ces solvants on peut citer le toluène, le benzène, l'éthanol, l'acétate d'éthyle.

La résine acrylique réticulable par rayonnement UV ou laser, peut éventuellement être associée avec une résine thermoplastique ayant un indice d'acide élevé de préférence supérieur à 120 du type acrylique, maléïque ou dérivé de la colophane. On peut citer à cet effet le produit vendu sous la dénomination "JONCRYL" par la société S.C. JOHNSON and Son, une résine pentaérythritol-phtalate tel que le produit vendu sous la dénomination PHTALOPAL PP par BASF.

Les compositions conformes à l'invention peuvent également contenir en association avec les monomères acryliques de la N-vinylpyrrolidone.

Des formes de réalisation préférée consistent à utiliser conjointement avec les résines et les monomères des co-initiateurs ou des photoinitiateurs tels que plus particulièrement des amines tertiaires insaturées comme les produits commercialisés sous la dénomination UVECRYL par la société UCB, le benzyldiméthylcetal tel que le produit commercialisé sous la dénomination IRGACURE 651 par la société CIBA GEIGY, des cétones aryliques comme par exemple le produit commercialisé sous la dénomination DAROCUR 1664 par la société MERCK, la 2-méthyl-1-[4-(méthylthio)phényl]2-morpholinopropanone-1, commercialisé sous la dénomination IRGACURE 907, par la société CIBA GEIGY, la benzophénone et ses dérivés tel que le produit vendu sous la dénomination UVEÇRYL D-36 par la société UCB.

Les compositions conformes à l'invention peuvent également contenir des agents stabilisants, des agents anti-oxydants parmi lesquels on peut

citer les produits commercialisés sous la dénomination de NUVOPOLS par la société RAHN ou le butylparacrésol comportant deux groupements t-butyl en ortho par rapport au groupement OH, ou le 4-t-butyl catéchol. Ces compositions peuvent également contenir des agents lubrifiants tels que des cires ou des silicones.

Le revêtement conforme à l'invention est appliqué éventuellement après mélange des différents ingrédients de la composition au moyen d'un pistolet pneumatique, airless, électrostatique, au disque ou au bol ou encore au rouleau, de préférence après le bouchage des récipients et avant ou après étiquetage. Le récipient, telle que la bouteille revêtue est soumis à un rayonnement UV ou laser pendant une durée de préférence comprise entre 5 et 10 secondes en vue de cacher les cicatrices formées sur le verre par les abrasions subies lors des manipulations successives antérieures. On constate à la sortie du tunnel la disparition de toutes les rayures et les bouteilles ainsi revêtues ont un aspect de neuf.

Lorsque ces bouteilles sont retournées il est possible de les laver dans un bain de soude caustique chaude, à une concentration de 5 à 10%.

Le revêtement ainsi obtenu doit avoir une épaisseur de 10 à 50 microns lorsqu'il est sec et présenter une dureté minimum crayon : H, un brillant minimum : 80 selon la méthode Gartner sous un angle de réflexion de 60°.

Une dégradabilité à la soude caustique entre 1 et 10 minutes dans un bain de soude, à une concentration de 1 à 5%, à une température de 70 à 100°C, un angle de glisse mesuré sur 3 bouteilles compris entre 14 et 25°.

Les exemples suivants sont destinés à illustrer l'invention sans pour autant présenter un caractère limitatif.

EXEMPLE 1.

On a préparé les compositions suivantes

PARTIE A

| | |
|---|---|
| - Ebecryl 1559 MA de UCB | 23.2 |
| - DEC 770 de UCB | 23.2 |
| - Diacrylate de 1,6-hexanediol | 30.7 |
| - acrylate d'éthyldiglycol | 15.9 |
| - Irgacure 651 de Ciba-Geigy | 4.6 |
| - Silane A-187 de Union Carbide | 0.5 |
| - 4 tertio butyl catechol | 0.1 |
| - Cire SL 404 de Daniel Products | 0.5 |
| - Byk 300 de Byk | 1.2 |

PARTIE B :

| | |
|---|---|
| - Joncryl 678 de Johnson Europlant | 34.0 |
| - Ethanol | 33.0 |
| - Toluène | 33.0 |

On mélange au moment de l'emploi 55% de la partie A avec 45% de la partie B. On applique ensuite au pistolet pneumatique, cette composition sur les bouteilles bouchées revêtues de l'étiquette et on fait passer les bouteilles ainsi revêtues dans un tunnel équipé d'une lampe UV pendant environ 5 à 10 secondes. A la sortie du tunnel les bouteilles peuvent être manipulées et ont un aspect neuf.

Ce revêtement peut être enlevé au retour au cours du lavage dans les conditions habituellement utilisées en brasserie.

EXEMPLE 2.

On prépare les compositions suivantes

PARTIE A

| | |
|---|---|
| - VPS 2052 de Degussa | 9.30 |
| - DEC 770 de UCB | 18.05 |
| - NVP de BASF | 9.30 |
| - Diacrylate de 1,6-hexanediol | 18.05 |
| - Uvecryl P 102 de UCB | 8.20 |
| - Irgacure 651 de Ciba-Geigy | 2.85 |
| - Silane A-187 de Union Carbide | 0.27 |
| - Benzophénone de S.F.O.S. | 1.64 |
| - 4-tertiobutyl catechol | 0.54 |
| - Byk 300 de Byk | 0.22 |
| - Ebecryl 350 de U.C.B. | 0.16 |
| - Diacrylate de tripropyleneglycol | 0.11 |

PARTIE B

| | |
|---|---|
| - Collophane WW de Alminet | 5.70 |
| - Rénadienne 177 C de S.C.P.R. | 11.35 |
| - Acétate Ethyle | 12.78 |

On mélange tout comme dans l'exemple précédent, les compositions A et B, et on applique a composition par voie électrostatique sous bol. On constate également après un passage sous tunnel équipé d'une lampe UV pendant environ 5 secondes, un aspect neuf des bouteilles qui peuvent immédiatement être manipulées.

EXEMPLE 3

On prépare la composition suivante

| | |
|---|---|
| - Ebecryl 1559 MA de UCB | 23.2 |
| - DEC 770 de UCB | 23.2 |
| - Diacrylate de 1,6-hexanediol | 15.7 |
| - IBOA de BASF | 30.7 |
| - Irgacure 651 de Ciba-Geigy | |
| - Silane A-187 de Union Carbide | 0.5 |
| - 4-tertiobutyl catechol | 0.1 |
| - Cire SL 404 de Daniel Products | 0.5 |
| - Byk 300 de Byk | 1.4 |

Cette composition appliquée comme précédemment donne lieu également après passage sous un tunnel équipé d'une lampe UV à un revêtement esthétique et permettant une manipulation immédiate des bouteilles.

Les produits commerciaux mentionnés ci-dessus correspondent aux produits suivants :

EBECRYL 1559 MA est un oligomer de polyester acrylate ayant une viscosité HOPPLER à 25°C d'environ 8000 m Pa.s.

DEC 770 est un oligomer de polyester acrylate ayant une viscosité HOPPLER à 25°C d'environ 100 m Pa.s.

IRGACURE 651 est un benzyldimethylcetal

SILANE A-187 est un trimethoxysilane de $\gamma$-glycidoxypropyle

BYK-300 est un copolymère non ionique de siloxane ayant une densité de 0,93-95g/cm³

JONKRYL 678 est une résine acrylique d'un indice d'acide 200 et une densité à 25°C de 1,10g/cm³.

VPS 2052 est un oligomère d'acrylate ayant une viscosité à 20°C de 450-500 m Pa.s.

UVECRYL P 102 est une amine tertiaire copolymerisable d'une fonctionnalité de 1.

RENADIENE 1775 est une résine thermoplastique maléîque,

NVP : N-vinyl-2-pyrrolidone (100% pur)

IBOA : Acrylate d'isobornyle - monomère aliphatique acrylate,

EBECRYL 350 de UCB: résine silicone diacrylate.

REVENDICATIONS

1. Procédé de réparation de récipients en verre, caractérisé par le fait que l'on applique au moins sur ces récipients une composition comprenant une résine acrylique, acrylique époxylée, polyester acrylique ou uréthane acrylique réticulable par rayonnement UV ou laser en solution dans au moins un monomère acrylique ou méthacrylique mono-, di- ou tri-fonctionnel.

2. Procédé selon la revendication 1, caractérisé par le fait que les résines acryliques réticulables par rayonnement UV ou laser sont présentes dans des proportions comprises entre 25 et 80 par rapport au poids total de la composition.

3. Procédé selon la revendication 1 ou 2, caractérisé par le fait que les résines réticulables par rayonnement UV ou laser ont un indice d'acide égal ou supérieur à 100.

4. Procédé selon l'une quelconque des revendications 1 à 3, caractérisé par le fait que les monomères acryliques ou méthacryliques mono-, di- ou tri- fonctionnel sont choisis parmi l'acide acrylique ou métha crylique, le diacrylate de butanediol, le diacrylate d'hexanediol, le diacrylate de triéthylènediol, le diacrylate de diéthylèneglycol, le diacrylate de triéthylèneglycol, le diacrylate de tétraéthylèneglycol, le diacrylate de dipropylèneglycol, le diacrylate de triproprylèneglycol, le diacrylate de triméthylol propane, le diacrylate de pentaérythritol, l'hydroxyméthylacrylate, l'éthyldiglycolacrylate.

5. Composition selon l'une quelconque des revendications 1 à 4, caractérisée par le fait que la composition mise en oeuvre contient également un solvant organique choisi parmi les solvants aromatiques, cétoniques, des esters ou des alcools.

6. Procédé selon l'une quelconque des revendications 1 à 5, caractérisé par le fait que la composition utilisée contient également une résine thermoplastique qui a un indice d'acide supérieur à 120, choisie parmi les résines acryliques, maléīques ou dérivés de la colophane.

7. Procédé selon l'une quelconque des revendications 1 à 6, caractérisé par le fait que la composition contient également de la N-vinylpyrrolidone.

8. Procédé selon l'une quelconque des revendications 1 à 7 caractérisé par le fait que la composition contient également des co-initiateurs ou des photoinitiateurs.

9. Procédé selon l'une quelconque des revendications 1 à 8, caractérisé par le fait que la composition mise en oeuvre contient à titre de photoinitiateur des amines tertiaires insaturées ou des cétones aryliques.

10. Procédé selon l'une quelconque des revendications 1 à 9, caractérisé par le fait que la composition mise en oeuvre contient des agents stabilisants, des agents anti-oxydants, des lubrifiants.

11. Procédé selon l'une quelconque des revendications 1 à 10, caractérisé par le fait que l'on applique la composition au moyen d'un pistolet pneumatique, airless, électrostatique, au disque ou au bol, ou encore au rouleau, après le bouchage des récipients et avant/ou après étiquetage, que le récipient revêtu est soumis à un rayonnement UV ou laser pendant une durée de 5 à 10 secondes.

12. Procédé selon l'une quelconque des revendications 1 à 11, caractérisé par le fait que le revêtement est appliqué de façon à avoir une épaisseur de 10 à 50 microns, lorsqu'il est sec.

13. Récipient en verre obtenu par le procédé selon l'une quelconque des revendications 1 à 12, caractérisé par le fait qu'il a un revêtement présentant une épaisseur de 10 à 50 microns à sec, une dureté minimum crayon : H, un brillant minimum : 80, selon la méthode Gartner, sous un angle de réflexion de 60°, une dégradabilité à la soude caustique entre 1 et 10minutes dans un bain de soude à une concentration de 1 à 5% et à une température de 70 à 100°C et un angle de glisse mesuré sur trois bouteilles compris entre 14 et 25°.

Office européen des brevets

# RAPPORT DE RECHERCHE EUROPEENNE

Numero de la demande

EP 87 10 6536

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| Y | GB-A-2 073 050 (JAGENBERG-WERKE AG)<br>* Revendications 1,2,4,5,9-12 *<br>--- | 1-13 | C 03 C 17/32 |
| Y | US-A-3 562 366 (W.E. SOHL)<br>* Exemple 1; revendications *<br>--- | 1-13 | |
| Y | GB-A-2 145 640 (UCBSA)<br>* Page 2, ligne 23 - page 3, ligne 28 *<br>--- | 1-13 | |
| Y | GB-A-2 018 624 (GTE SYLVANIA)<br>* Page 3, ligne 51 - page 4, ligne 3 *<br>--- | 1-13 | DOMAINES TECHNIQUES RECHERCHES (Int Cl 4) |
| E | CHEMICAL ABSTRACTS, vol. 106, no. 20, 18 mai 1987, page 93, résumé no. 158080t, Columbus, Ohio, US; & JP-A-61 241 366 (TOYO INK MFG. CO. LTD; KIRIN BREWERY CO. LTD) 27-10-1986<br>----- | 1-13 | C 03 C 17/00 |

Le présent rapport de recherche a été établi pour toutes les revendications

| Lieu de la recherche | Date d'achèvement de la recherche | Examinateur |
|---|---|---|
| LA HAYE | 05-08-1987 | BOUTRUCHE J.P.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention
E : document de brevet antérieur, mais publié à la date de dépôt ou après cette date
D : cité dans la demande
L : cité pour d'autres raisons
& : membre de la même famille, document correspondant